Europäisches Patentamt

(19) European Patent Office

Office européen des brevets

(11) Publication number: **0 160 522**
**B1**

## (12) EUROPEAN PATENT SPECIFICATION

(45) Date of publication of patent specification: **29.08.90**

(21) Application number: **85302916.3**

(22) Date of filing: **25.04.85**

(51) Int. Cl.⁵: **H 02 K 1/08**

(54) Magnetic-pole cores for electrorotary machines.

(30) Priority: **25.04.84 JP 85038/84**
**14.06.84 JP 122339/84**
**02.11.84 JP 232171/84**
**21.12.84 JP 271221/84**
**27.12.84 JP 278130/84**

(43) Date of publication of application:
**06.11.85 Bulletin 85/45**

(45) Publication of the grant of the patent:
**29.08.90 Bulletin 90/35**

(84) Designated Contracting States:
**DE FR GB**

(56) References cited:
**DE-A-1 788 135**
**DE-A-2 551 828**
**DE-B-1 563 156**

(73) Proprietor: **Komatsu, Fumito**
**69-1632-12, Nomura Aza Ooaza Hirooka**
**Shiozirishi Naganoken (JP)**
㊽ **DE FR**

(73) Proprietor: **Watanuki, Takao**
**2-4-21 Miyoshicho**
**Nakanoshi Naganoken (JP)**
㊽ **GB**

(72) Inventor: **Komatsu, Fumito**
**1632-12, Nomura Ooaza Hirooka**
**Shiozirishi Naganoken (JP)**

(74) Representative: **Calderbank, Thomas Roger**
**et al**
**MEWBURN ELLIS & CO. 2/3 Cursitor Street**
**London EC4A 1BQ (GB)**

Courier Press, Leamington Spa, England.

## Description

The present invention relates to a magnetic-pole core for electrorotary machine such as a DC or AC motor or a stepping motor.

Multipolar DC motors are already known which have a ring-shaped field magnet with 2n poles (n being an integer equal to or more than 2) around the magnet, the poles being magnetized so that adjacent poles are opposite in polarity. The motor has an armature including a coil of concentric windings on a shaft. The armature is placed flat between a pair of magnetic-pole cores, with each core having its edge section bent over the circumferential face of the coil so that there are magnetic poles which extend alternately from each core and alternate in polarity. There is usually a changeover means for changing the direction of current for the coil in correspondence with the rotation of the armature.

When such a multipolar DC motor is constructed using a pair of magnetic-pole cores with rectangular magnetic-pole sections, the centre of the magnetic pole of the field magnet will coincide with the centre of the magnetic pole of the magnetic-pole section of armature at start-up (i.e. spontaneous stop position), resulting in the generation of a start-up dead-point. Thus, with DC motors, the start-up dead-point exists at the polarity changeover point of the commutator, making their use unrealistic in practice.

To solve the problem of the existence of a start-up dead-point in conventional electrorotary machines such as motors, it is known to provide an L-shaped auxiliary pole in each interval between the main magnetic poles, which are at equal intervals. Alternatively a frame making the magnetic pole magnetically asymmetric is put on the core face with the magnetic pole, or some other means is adopted. These counter-measures have the purpose of allowing the centre of the magnetic pole of the field magnet to deviate by a constant angle from the centre of the magnetic pole of the magnetic-pole section of armature, thereby avoiding a start-up dead-point.

These conventional countermeasures resort to using additional materials on the magnetic pole (main magnetic pole) to avoid a start-up dead-point. However, this additional use of materials necessarily results in disadvantages such as a complex structure, an increased size, and an increase in cost.

Another disadvantage occurs in conventional electrorotary machines. The efficiency of such machines is maximized at a constant load torque, whereas the starting torque is much less than the maximum efficiency load at some angles of rotation. It follows that start-up is impossible unless the load is small and hence the overall efficiency is very low.

In view of these problems, the inventor of the present invention has tried to avoid a start-up dead-point by modifying the shape of the magnetic pole section of the magnetic-pole core. The first modification tried involved extending the face of the core, which forms the magnetic circuit for the concetrically-wound coil and is positioned close to the field magnet, in the direction of rotation of the armature, thereby making the shape of the core face magnetically asymmetric with respect to the centres of the magnetized poles on the field magnet. The magnetic asymmetry allows the centres of the magnetic poles of the armature, when current is passing, to be at a position a little away from the spontaneous stop position of the armature in the direction of rotation. The spontaneous stop position is the position the armature stops upon interruption of current, under the influence of the attractive force of the field magnet. This modification made it possible for the armature coil to have concentric winding to increase the number of windings, and to raise the efficiency of the motor, thus permitting multipolar DC motors to be made which are relatively flat.

However, motors with such modification had the following disadvantages:

(1) The maximum starting torque, as a function of rotary angle, is considerably less than the load torque for maximum efficiency.

(2) The variation in the attractive torque of the magnet is large, so that there is a considerable irregularity in rotation of the motor.

In general, a DC motor employing a concentrically-wound armature coil has a changeover point of current to the armature where the centres of the magnetic poles of the armature coincide with the centres of the magnetic poles of the field magnet. Thus, when the magnetic-pole core provided on the armature is rectangular (the standard shape) and the motor has stopped with the centres of the magnetic poles of the armature in coincidence with the centres of the magnetic poles of the field magnet, start-up is no longer possible.

Even when the shape of the magnetic-pole core of the armature is magnetically asymmetric, it may be impossible to start the motor. This may occur, for example, if no current is passing in the armature when the armature and field magnet have coincided with each other with respect to the centres of the magnetic poles and the attractive torque between the field magnet and armature is less than the load torque.

If a DC motor with a such a structure is to avoid a start-up dead-point, i.e., may start to rotate without fail, it is necessary that the attractive torque of the field magnet is more than the load torque when a current interruption occurs with the centres of the magnetic poles of the armature and field magnet in coincidence with each other. This avoids a start-up dead-point but results in irregular rotation of the armature since the peak attractive torque of the field magnet when no current is passing is too high.

The inventor of the present invention has discovered that irregular rotations are minimised if:

(a) The atractive torque between the magnet and armature when no current is passing should exceed slightly the load torque at start-up when the centres of the magnetic poles of the armature and field magnet coincide with each other.

(b) At the position specified in (a) above, the torque specified in (a) should be close to the maximum torque.

The condition (b) cannot be fulfilled merely by extension of the face of the armature core facing the field magnet. This is because neither the maximum torque for the attractive torque specified in condition (a) can be varied, nor can there by any arbitrary adjustment in the maximum torque position, even if the length or width of the extended section of the core is varied.

On the other hand, increasing the efficiency of DC motors requires that the magnetic flux of the magnetic field should pass not only through the inside of the core enveloping the armature coil from both its flat faces but also through the part of the core facing the field magnet when the core is positioned between adjacent N-S poles of the field magnet poles.

If this is to be fulfilled, the gap between adjacent magnetic poles of different polarities on the core which provides magnetic poles of alternate polarities over the circular face of the armature coil, should be as short as possible. However, decreasing the gap merely by extension of the face of the coil facing the field magnet causes the problem that the attractive torque of the field magnet is so large that a large starting current is required.

DE—B—1563156 discloses a magnetic pole core for an electrorotary machine having a base section and a plurality of magnetic-pole sections on the base section. The magnetic-pole sections also have sub-sections forming first and second magnetic-pole pieces.

DE—A—2551828 discloses a magnetic pole core having base sections thereon. These magnetic-pole sections have extended sections.

The present invention therefore seeks to reduce the risk of a start-up dead-point, but permit regular and efficient rotation. It achieves this in that at least some of the magnetic-pole sections have three subsections forming first, second and third magnetic-pole pieces, wherein said third magnetic-pole piece is provided between said first and second magnetic-pole pieces and said third magnetic pole piece is connected to said first and second magnetic-pole pieces and to said base section.

This structure permits prevention of a start-up dead-point because, upon passage of current for start-up, there is a displacement between the centres of the magnetic poles of the armature and the mid-point of the field magnet in the circumferential direction or the mid-point of adjacent poles of the field magnet in the circumferential direction. The characteristic structure enables irregular rotations to be reduced and promoting the efficiency.

Since the coil is concentrically-wound, it is possible to have a multipolar structure, reducing the thickness of electrorotary machines, permitting the use of high voltages, and lowering the cost of construction.

For conventional motors of various types, increase in the number of poles has failed to make rotary torque available which corresponds to the increase in poles. However, the use of a magnetic-pole according to the present invention permits rotary torques to be achieved which do correspond to the increase in the number of poles.

Embodiments of the invention will now be described in detail, by way of example, with reference to the accompanying drawings, in which:

Fig. 1 is a partially expanded front view of a magnetic-pole core for an electrorotary machine according to a first embodiment of the present invention;

Fig. 2 is a plan view of parts of an electrorotary machine;

Fig. 3 shows rotary angle vs. torque characteristics of an electrorotary machine using the magnetic-pole core shown in Fig. 1;

Fig. 4 shows load torque characteristics of an electrorotary machine using the magnetic pole core shown in Fig. 1;

Fig. 5 is a front view of a rectangular magnetic-pole section of a magnetic-pole core;

Fig. 6 is a partial front view of a magnetic-pole core for an electrorotary machine according to a third embodiment of the present invention;

Fig. 7 is a partial front view of a magnetic-pole core for an electrorotary machine according to a fourth embodiment of the present invention;

Fig. 8 is a partial front view of a magnetic-pole core for an electrorotary machine according to a fifth embodiment of the present invention;

Fig. 9 is a partial front view of a magnetic-pole core for an electrorotary machine according to a sixth embodiment of the present invention;

Fig. 10 is an exploded perspective drawing of a general-purpose DC motor;

Fig. 11 is a partially-exposed plan of a DC motor for floppy disks;

Fig. 12 is a sectional view along the line I—I in Fig. 11;

Fig. 13 is a schematic plan view of an AC motor;

Fig. 14 is a sectional view along the line II—II in Fig. 13;

Fig. 15 is an exploded perspective drawing of the AC motor of Fig. 13;

Fig. 16 is a perspective view illustrating the operation of the AC motor of Fig. 13;

Fig. 17 is a partially-exposed plan of a stepping motor; and

Fig. 18 is a longitudinal sectional view of the motor shown in Fig. 17.

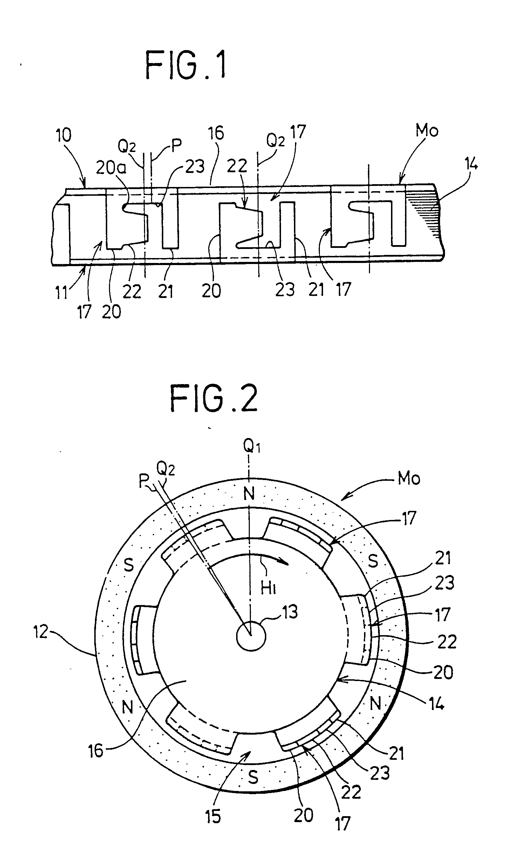

Figs. 1 and 2 show an inner-rotor motor Mo to which magnetic-pole cores 10 and 11 according to a first embodiment of the present invention are applied.

First, the structure of the motor Mo will be described. A ring-shaped field magnet 12 with three sets of North N and South S poles alternately magnetized is positioned around the outside as a stator. A coil 14 is wound around a shaft 13. A magnetic-pole core 10, covers one of the flat faces of the coil 14, and a magnetic-pole core 11, similar to the core 10, covers the other flat face of the coil 14. They are both fixed on the shaft 13, and, together with the shaft 13 and coil 14 form an armature 15.

The magnetic-pole core 10 includes a base section 16, having a disk part and three radial parts each extending radially outward from three positions distributed at equal intervals around the circumference of the disk part. The core 10 also has magnetic-pole sections 17, each of which extends approximately at a right angle from each of the radial parts so as to lie over the circumferential face of the coil 14. The magnetic-pole sections 17, three for each base section, are formed integrally with the base section 16.

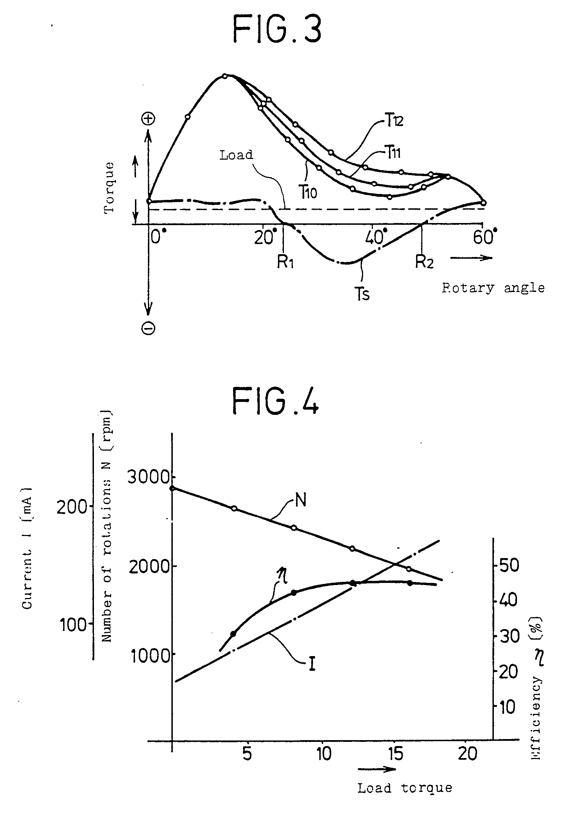

Each magnetic-pole section 17 is divided into two subsections perpendicular to the circumferential direction of the coil 14, thus forming a first magnetic-pole piece 20 and a second magnetic-pole piece 21. The first magnetic-pole piece 20 has an integral extended section 22 on its longitudinal side 20a, which section 22 extends along the circumference of the coil 14 toward the second magnetic-pole piece 21. The extended section 22 is located in the middle of the longitudinal side 20a and has the form of trapezoid increasing in width with increasing distance from the side 20a. A third magnetic-pole piece 23 is provided between the first and second magnetic-pole pieces 20 and 21, the area of the third magnetic-pole piece 23 having a predetermined value. The third magnetic-pole piece 23 is formed integrally with the first and second magnetic-pole pieces 20 and 21 and the base section 16. The first and second magnetic-pole pieces 20 and 21, (excluding the third magnetic-pole piece 23 and the extended section 22), both have rectangular forms and have substantially the same height from the base section 16. The interval between the first and second magnetic-pole pieces 20 and 21, the form and area of the extended section 22, and the area of the third magnetic-pole piece 23 are arbitrarily variable. Suitable variation of these parameters may result in optimal setting of characteristics as seen from Figs. 3 and 4. Thus, the binary division of the magnetic-pole section 17 into the first and second magnetic-pole pieces 20 and 21 enables the area of magnetic-pole section 17 of the armature 15 relative to the field magnet 12 to be minimized. At the same time the angular magnitude of the gaps between adjacent different-polarity magnetic-poles may be reduced; these effects will result in extremely high efficiency.

The extended section 22 has an important effect on the relative stop position of armature 15 and field magnet 12 when no current is passed. The presence of the extended section 22 allows the centres of the magnetic-poles of the armature 15 at start-up passage of current to deviate from the circumferential mid-point of the pole of field magnet 12 (S or N pole) or the circumferential mid-point between poles (between S and N poles) of the field magnet 12. Note that the stop position will belong to one of the two mid-points, corresponding to different rotational directions, in dependence on the total width of the magnetic-pole section 17, in particular whether it is relatively small or large. Thus, the extended section 17 makes the first and second magnetic-pole pieces 20 and 21 magnetically asymmetric by causing the geometrical centre of the magnetic-pole section 17 to deviate from its magnetic centre, thereby eliminating a start-up dead-point. The effect of the third magnetic-pole piece 23 is indicated in Fig. 3. When the area of the third magnetic-pole piece 23 is relatively small, the starting torque corresponds to the curve $T_{10}$ and as the area of the third magnetic-pole piece 23 increases, the starting torque changes first to curve $T_{11}$ and then to curve $T_{12}$.

The magnetic-pole core 11 has a structure similar to the core 10 and thus the cores 10 and 11 form a pair. The magnetic-pole sections of the cores 10 and 11 are bent in opposite directions but they are arranged over the circumferential face of the coil 14 so that they have the same shape of magnetic-pole pieces and are provided alternately with respect to the cores to which they correspond.

The operation of the motor Mo will now be described. Assume Fig. 2 refers to a DC motor which will rotate in the direction of arrow $H_1$, with the centre between the magnetic poles of the field magnet 12 being represented at $Q_2$ and the centre between magnetic poles of the armature being represented at P when current is passing. The direction of the current suppled to the coil 14 is changed over by a changeover means (not shown) to cause the rotation to be maintained when the point P in Fig. 2 has come close to the point $Q_1$, one of the magnetic poles of the field magnet 12.

The rotational torque (the attractive torque between the armature and field magnet) of the armature when no current is passing and no load is applied corresponds to the characteristic curve $T_s$ in Fig. 3. Now, let the rotational torque be indicated $\oplus$ or $\ominus$, corresponding respectively to the cases when the attractive torque causes the armature 15 to rotate to the right and to the left. The armature 15 is first casued to rotate to the right by the $\oplus$ rotational torque until it stops at the spontaneous stop position R1 which allows stable positioning under no load. As the armature 15 rotates further to the right, the armature 15, passing through circumferential angles which generate $\ominus$ rotational torque, reaches the unstable stop position R2, through which the armature 15 will rotate to the right toward the next spontaneous stop position R1 (not shown).

If the shape, dimensions, etc. of the first second, and third magnetic-pole pieces 20, 21, and 23, the extended section 22, are selected, the rotational torque which is displayed when the armature 15 and the field magnet 12 are at the changeover position for armature current (i.e. with their magnetic-pole centres facing each other), may be brought into correspondence with the region of the peak. At the same time the rotational torque may be set at a value a little higher than the starting load torque.

Under load, the armature 15 will not stop at a position in Fig. 2 where the points P and $Q_1$ coincide. It follows that a start-up dead-point may be avoided and irregularities in the rotation of armature 15 may be minimized since the rotational torque of the armature 15 is higher than the starting load torque by at least the minimum necessary amount.

The spontaneous stop position, as shown in Fig. 3, corresponds to the point R2 in the attractive torque characteristic curve $T_s$ when no current is passing. Although this point R2 is located near the bottom of the starting torque characteristic curve $T_{10}$, the starting torque at start-up may, due to the effect of the third magnetic-pole piece 23, be increased to $T_{11}$ or $T_{12}$. This starting torque may be adjusted as described above by selecting the area, etc. of the third magnetic-pole piece 23.

Fig. 4 shows a load torque characteristic curve for a motor Mo equipped with the magnetic-pole cores 10 and 11 of Fig. 1. This characteristic shows the variation in current I, number of rotations N and efficiency π with load torque. The specification of the motor giving the characteristic of Fig. 4 is as follows:

Rated voltage: 4.5V
Field magnet: I.D. 24.5φ
Coil: 0.32φ, 550 turns

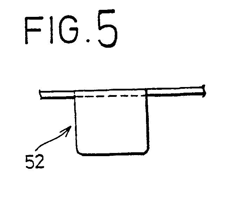

Fig. 5 shows a second embodiment of the present invention. The second embodiment modifies the magnetic-pole sections 17 of the magnetic pole cores. For example, the magnetic-pole sections 21 are provided every alternate position and rectangular magnetic-pole sections 52 shown in Fig. 5 are located in the other positions.

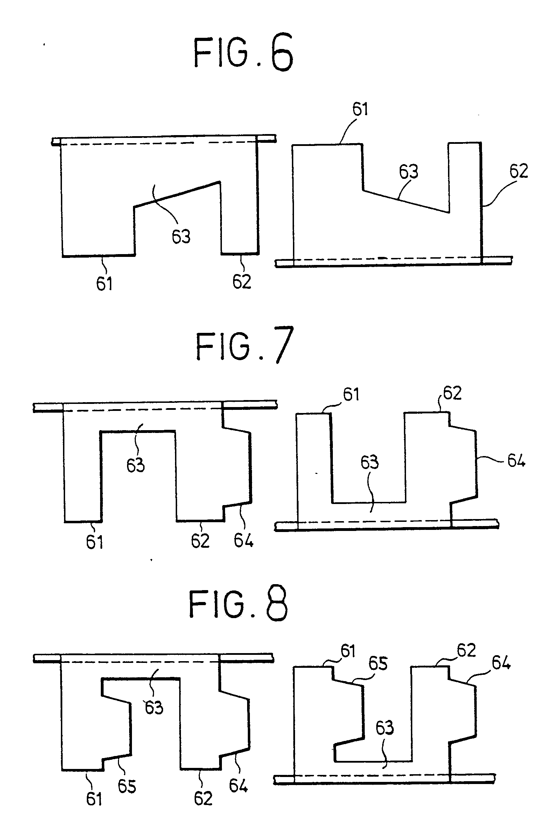

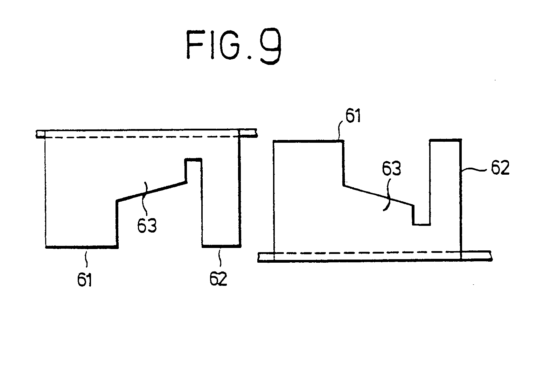

Figs. 6 to 9 show modifications of the form of magnetic-pole sections, corresponding to the 3rd to 7th embodiments, respectively in Figs. 6 to 9, the first magnetic-pole piece, the second magnetic-pole piece, and the third magnetic-pole piece are respectively indicated by reference numerals 61, 62, and 63. In Figs. 7 and 8 embodiments are shown which have extended sections 64 and 65 from the first and second magnetic-pole pieces.

Various electrorotary machines to which the magnetic-pole cores according to the present invention may be applied will now be described.

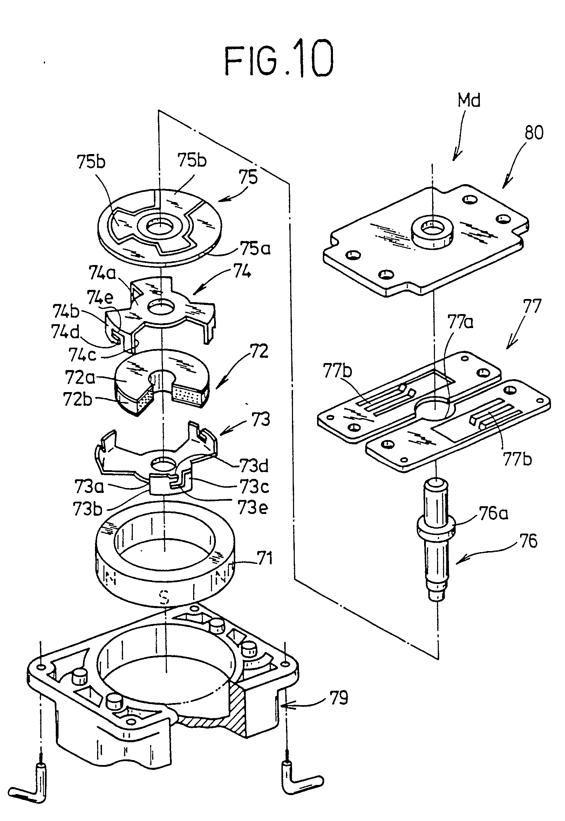

Fig. 10 shows an example of a general-purpose DC motor Md, which is easy to construct and has a wide range of practical uses. A permanent magnet ring 71 acts as a stator, and has six poles magnetized on its inner circular face so that N and S poles alternate. Note that the adoption of 2(2m+1) poles (m: an integer equal to or more than 1) always results in magnetic poles of different polarities facing each other.

A coil 72 is formed by winding a wire 72b in a circular bobbin 72a having a through-hole at its centre for a shaft.

A lower core 73 is formed according to the present invention by processing a magnetic material such as iron plate, using a press. The lower core 73 consists of a disk section 73a concentric under the lower end face of the coil 72 and three assemblies, each of a first magnetic-pole piece 73b, a second magnetic-pole piece 73c, an extended section 73d of the first magnetic-pole piece 73b, and a third magnetic-pole piece 73e, which extend from the edge of the disk section at intervals of 120° and are bent 90° over the outer circular face of the coil 72.

An upper core 74, similar to the lower core 72, is located placed concentrically on the upper end face of the coil 72, consisting of a disk section 74a, a first magnetic-pole piece 74b, a second magnetic-pole piece 74c, an extended section 74d of the first magnetic-pole piece 74b, and a third magnetic-pole piece 74e.

The lower core 73 and upper core 74 are positioned on the coil 72 so that the first and second magnetic-pole pieces 73b and 73c of the lower core are positioned between the first and second magnetic-pole pieces 74b and 74c of the upper core.

A commutator 75 consists of a disk 75a of an insulating material with a through-hole for a shaft at its centre and six commutator bars 75b glued on one face of the disk 75a radially from the centre. Alternate commutator bars are connected electrically to each other to form two groups of interconnected commutator bars, each group being connected to the coil 72.

A shaft 76 has a flange 76a provided approximately centrally in the longitudinal direction.

The shaft 76 is inserted into the commutator 75, the upper core 74, the coil 72, and the lower core 73, and the lower core 73 is held to the lower part of the shaft 76 to fix the assembly in place.

Each brush 77 of the motor is in the form of a rectangular plate of phosphor-bronze, and has an arc-shaped notch 77a in the middle of one of the longer sides forming an escape section for the flange 76a. Each brush 77 also has a sliding contact section 77b to the commutator 75 cut up in the middle of plate. The provision of two sliding contact sections 77b is to secure contact to the commutator 75.

Two brushes 77 are disposed point-symmetrically with the shaft 76 held therebetween, each sliding contact section 77b being in contact with the groups of bars of the commutator 75.

A case 79 for the motor Md is made of a plastic material and has a cover 80 of a plastic plate attached to its upper face.

The assembly of the components described above is made, as the one-point chain line indicates, by fixing the permanent magnet ring 71 within the case 79, applying the armature (being the coil 72, the lower core 73, the upper core 74, the commutator 75, and the shaft 76) to the shaft 76 so that the armature is in the middle of the permanent magnet ring 71, positioning the brush 77 on the cover 80, allowing the case 79 to receive the cover 80, and finally applying e.g. thermal fusion, to fix the case 79 to the cover 80.

A DC motor having such a structure has various advantages. The armature coil concentrically wound on the shaft is easy to form. The commutator and brush, both in the form of plate, together with the concentrically-wound armature coil, permit miniaturization, of the motor Md. Assembly is easy because the brush is between the case and cover and may be fixed thereto. Two identical brush pieces may be arranged point-symmetrically with respect to the rotary shaft since the number of poles adopted is set at $2(2m+1)$. The transmission machanism for the motor rotation may adopt spur gears, instead of inefficient worms and worm gears, because the flat motor and the possibility of increasing the number of poles allows the speed of rotation to be reduced.

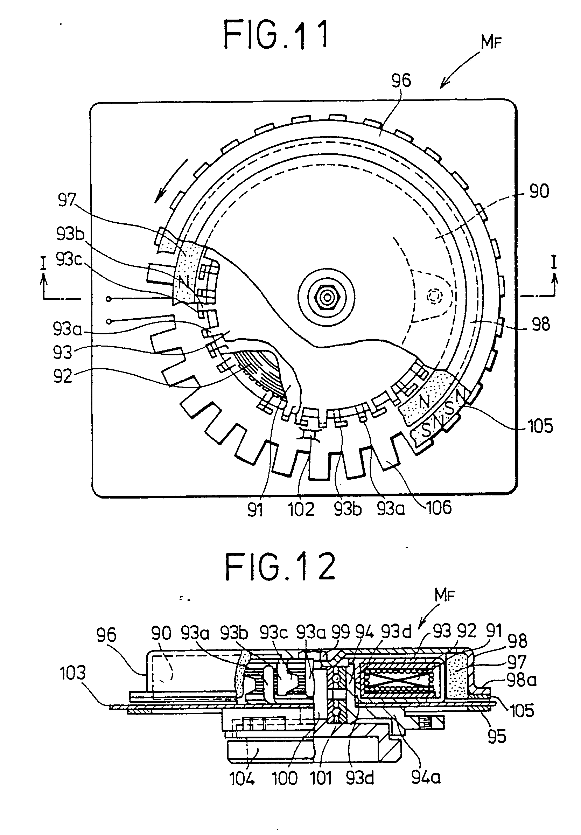

Figs. 11 and 12 refer to a DC motor $M_F$ for a floppy disk to which the magnetic-pole core of the present invention is applied.

An armature 90 consists of a coil 92 concentrically wound on a bobbin 91 and cores 93, covering the coil 92, which have on their faces against the twenty rotor poles so that adjacent poles are opposite in polarity.

The core 93 has poles 93a and poles 93b, and each pole 93b has an extended section 93c extending toward the pole 93a. The core 93 is formed by combining the upper and lower-side cores so that a closed magnetic circuit is formed on the inner circumferential face of the coil 91. The core is easy to form since the upper and lower cores may be a press processed integrally with the poles 93a and 93b and a closed magnetic circuit section 93d.

A fixing piece 94 tightly fitted to the inner circumferential face of the armature 90; its flange section 94a is fixed on the base plate 95, and the armature 90 is fixed on the base plate 95.

The motor M has a rotor 96, consisting of a permanent magnet ring 97, (which faces the outer circumferential face of the armature 90 and is magnetized so that adjacent poles are opposite in polarity) a yoke 98 in a form of cup which covers the outer circumferential face and one end face of the permanent magnet ring 97 and is attached to the permanent magnet ring, and a shaft 10 fixed by a nut 99 at the centre of the flat side face of the yoke 98. The shaft 100 is inserted into a bearing 101 in contact with the inner circumferential face of the fixing piece 94, with the rotor supported so that it can rotate.

The yoke 98 needs to be of magnetic material at least at the part in contact with the circumferential face of the permanent magnet ring 97.

The motor $M_F$ also has a Hall element 102, which serves to change over the direction of the current to the coil 92 in correspondence with the rotation of the magnetic poles of the permanent magnet ring 97, on a printed circuit board 103 added to the base plate 95, facing the permanent magnet ring 97.

The Hall element 102 changes the direction of the current to the coil 92 in correspondence with the rotation of the rotor 96, alternately generating different poles at the respective tips of the core 93, thus allowing the rotor 96 to continue to rotate. This in turn allows the rotation of a turntable which is fixed on the shaft 100 and carries a floppy disk (not shown).

Next, a mechanism for monitoring the rotary speed of the rotor 96 will be described.

A generating magnet 105, in a form of a flat permanent magnet ring, is attached to a bent section 98a of the yoke 98. The flat side face 60 of the generating magnet 105 has poles magnetized alternately in polarity, the pitch of the magnetic-poles being smaller than the pitch of the poles of the rotor 96.

A generating coil 106 generates a voltage due to the rotation of the generating magnet 105, which voltage is proportional to the speed of rotation of the rotor 96. The frequency is proportional to the speed of rotation of the rotor 96 and is higher than the number of rotations of the rotor 96. Thus, the speed of rotation of the rotor 96 between the magnetic poles of the armature 90 may be measured, which permits speed control.

The motor $M_F$ is inexpensive since its structure is simple and it requires only one Hall element and associated circuits. In particular, such a motor for use with an 8.9 cm (3.5 inch) floppy disk will be more inexpensive, because unlike a conventional plane-facing type, no load is generated in the axial direction and no expensive ball bearings need to be used.

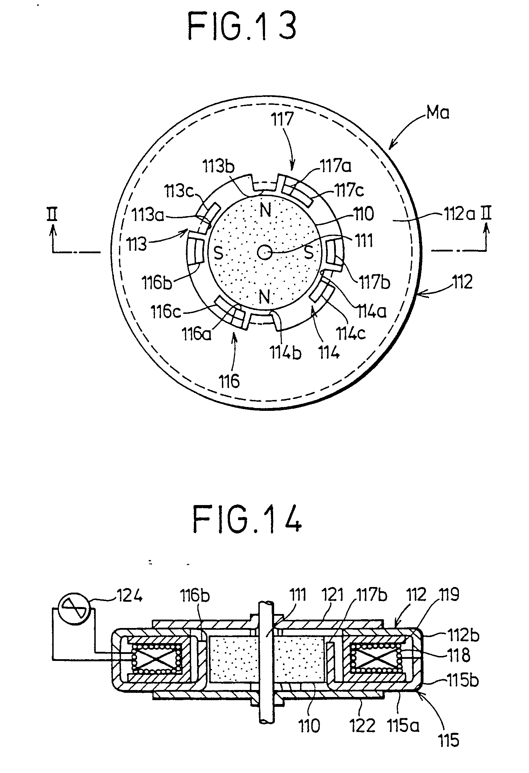

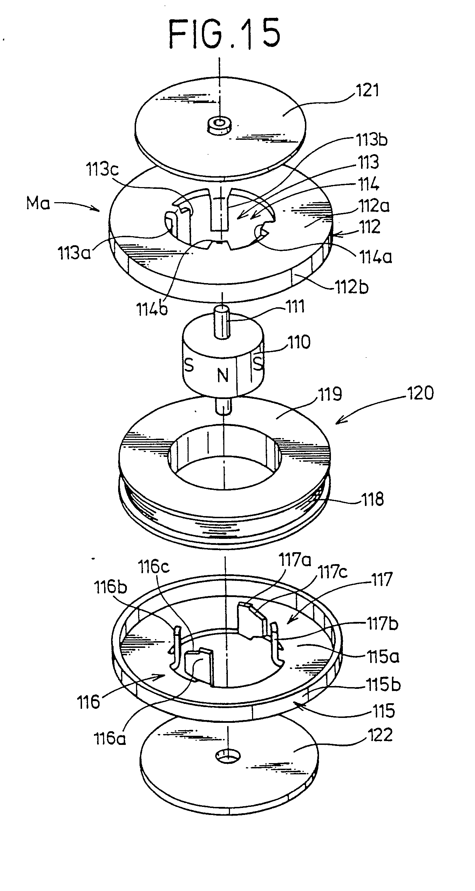

Figs. 13 to 16 show an example of an AC motor Ma. A permanent magnet rotor 110, i.e., a permanent magnet in a form of cylinder, has two North N and two South S poles magnetized alternately at equal intervals around the cylinder. This rotor 110 has a shaft 111 inserted at its centre.

An upper core 112 has a flange 112b bent at approximately 90° downward from the outer edge of a circular ring 112a. The upper core 112 has a circular opening at its centre, and its inner edge has integral magnetic poles 113 and 114, bent downward at a right angle. These magnetic poles 113 and 114 face each other, i.e. are separated by 180° and each is divided into two sub-sections perpendicular to the circumferential direction, one sub-section being wide and the other narrow. Thus, first magnetic-pole pieces 113a and 114a and second magnetic-pole pieces 113b and 114b are formed. The first magnetic-pole pieces 113a and 114a are each provided with an extended section 113c, 114c which extends toward the second magnetic-pole pieces 113b, 114b, so that both the first and second magnetic-pole pieces are magnetically assymetric.

A lower core 115 has a flange 115b bent at approximately 90° upward from the outer edge of a circular ring 115a. The end face of this flange 115b is in contact with the end face of the flange 112b. The upper core 112 has a circular opening at its centre, and its inner edge has integral magnetic poles 116 and 117, bent upward at a right angle. These magnetic poles 116 and 117 are similar to the magnetic poles 113 and 114 and are positioned with a 90° phase displacement relative to the magnetic poles 113 and 114. The first magnetic-pole pieces are shown at 116a and 117a, the second magnetic-pole pieces are shown at 116b and 117b, and the extended sections shown at 116c and 117c.

The relationship between the magnetic poles 113, 114, 116, and 117 is such that the magnetic poles 113 and 114 on the upper core 112 and the magnetic poles 116 and 117 on the upper core 115 are spaced alternately, surrounding the circumferential face of the rotor 110 with a predetermined spacing. There will be a slight angular clearance on each magnetic pole, e.g., 113 and 116.

The assembly of an armature 120 is completed by positioning a circular bobbin 119, having a concentrically-wound coil 118, between the rings 112a and 115a.

Upper and lower board bearings 121 and 122, made of a non-magnetic material, are in the form of a disk.

This structure avoids a start-up dead-point because the shape of the first and second magnetic-pole pieces may be adjusted to vary to a considerable extent the rotary torque characteristic when no current is passing, in dependence on the attractive force of the magnet, and the relationship at the spontaneous stop position, between the position of the magnetic-pole core and the position of the magnetized pole on the permanent magnet ring.

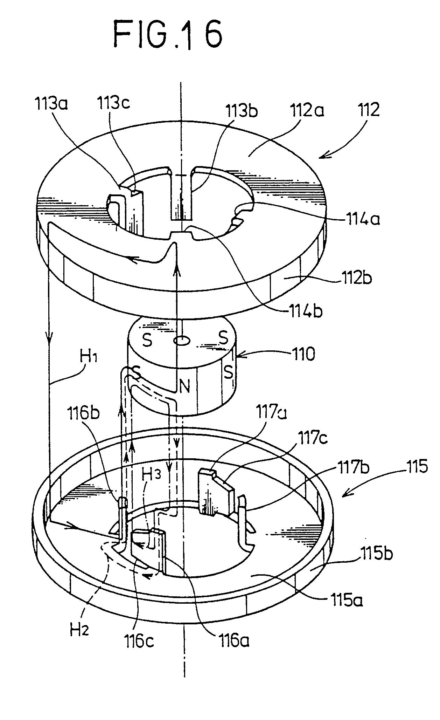

AC power is supplied from an AC power supply 124 to the coil 118 which causes the magnetic poles 113, 114, 116, and 117 to change alternately between North N and South S poles, thus forming a synchronous motor, the rotary direction of which, may be adjusted by selecting the shape and position of each magnetic-pole piece. Adjustment of the direction of rotation is made possible because the magnetic circuits are combined in such a complex manner, so that a change in the relative shape of the first and second magnetic-pole pieces will result in a change in the characteristic of the magnetic circuits. The sequence for this change will be described below by reference to Fig. 16.

The magnetic circuits when no current is passing are as follows:

① (Solid line $H_1$ with arrows) The North N pole of the rotor 110 → the second magnetic-pole piece 114 of the upper core 112 → ring 112a →flange 112b →flange 115b → ring 115a → the second magnetic-pole piece 116b of the lower core 115 → the South S pole of rotor 110 → the North N pole of rotor 110.

② (Dotted line $H_2$ with arrows) The North N pole of rotor 110 → the first magnetic-pole piece 116a of the lower core 115 → ring 115a → the second magnetic-pole piece 116b of the lower core 115 → the South S pole of the rotor 110 → the North N pole of the rotor 110.

③ (Chain line $H_3$ with arrows) The North N pole of the rotor 110 → the first magnetic-pole piece 116a of the lower core 115 → the extended section 116c → the South S pole of the rotor 110 → the North N pole of the rotor 110.

These three magnetic circuits may be regarded as dominant, although in general a magnetic circuit produces so much leaking magnetic fluxes that the full magnetic circuit is not wholly clear. This is the case with the other magnetic poles.

The spontaneous stop position of the rotor 110, relative to the magnetic pole 113, when no current is passed, depends on the ratio of the attractive forces generated in the above magnetic circuits ① to ③. Thus, as the extended section 113c is lengthened, the effect of the magnetic circuit ③ is increased, attracting the South S pole of the rotor 110 toward the front end of the extended section 113 by more than the angle of the extension. As a result, when current is passed, the rotor 110 will rotate away from the field magnet pole which is located at the smaller angle from the spontaneous stop position of the armature. In this situation, the motor output is high and accordingly the efficiency is good.

When initially a wave form is input which causes a rotation in the direction opposite to the normal one, both the centres of the magnetic poles of rotor 110 and armature 120 are attracted in that opposite direction, a delicate relationship of attraction due to inertia resulting in some deviation. It is, therefore, necessary that the inertia does not cause too much deviation, which requirement is satisfied by adjusting the system parameters in accordance with the magnitude of e.g. the power input, and the load.

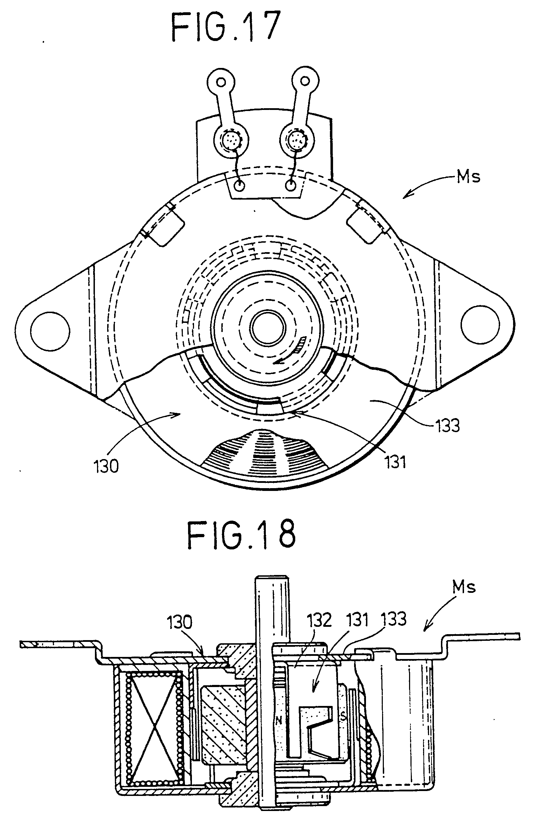

Figs. 17 and 18 refer to an example of a stepping motor $M_s$. The stepping motor has the same structure as the AC motor Ma shown in Figs. 13 to 15. Thus, when pulses are successively input into the coil 118 shown in Fig. 14, the motor Ma rotates successively by a constant angle. The difference in structure between the stepping motor shown in Fig. 17 and the motor shown in Fig. 14 is that a magnetic-pole section piece 132 containing a magnetic-pole section 131 is formed separately from a base section 133, both being combined to form a magnetic-pole core 130. Such a structure may eliminate the disadvantages inherent in the one-body core of Fig. 16. The core of Fig. 16 has its inner circular section bent to form the magnetic pole 113, etc. so that the shape of the magnetic-pole section is restricted (e.g., the height cannot be made so tall), as is the number of poles (poles cannot be increased in number), but the use of the magnetic-pole section piece 132, which allows the formation of the magnetic-pole sections by bending its outer circumferential side, has led to the successful elimination of the above-mentioned disadvantages.

Various embodiments and uses have been described, but the present invention is not, of course, limited to them. Thus, the first, second and third magnetic-pole pieces and the extended section may have arbitrary shape, and the position and number of extended sections may be arbitrary (e.g., two sections in parallel). In addition to the motors described, a wide range of electrorotary machines may utilize the present invention such as a fan motor, a car loading motor, a timer motor, a conduit motor, and a rotary plunger. The structure of such electrorotary machines, e.g. whether they are of the inner or outer-rotor type will impose no restriction. Any other modifications not deviating from the claims of the present invention may be considered as being within the scope of the present invention.

## Claims

1. A magnetic-pole core (10, 11) for an electrorotary machine having a base section (16) and a plurality of magnetic-pole sections (17) on the base section (16); characterised in that at least some of the magnetic-pole sections (17) have three subsections forming first (20) second (21) and third (23) magnetic-pole pieces, wherein said third (23) magnetic-pole piece is provided between said first (20) and second (21) magnetic-pole pieces and said third (23) magnetic-pole piece is connected to said first (20) and second (21) magnetic-pole pieces and to said base section (16).

2. A magnetic-pole core according to claim 1 wherein the first (20) and second (21) magnetic-pole pieces have substantially the same height from the base section (16).

3. A magnetic-pole core according to claim 1 or claim 2 wherein the first (20) and second (21) magnetic-pole pieces are at different radial positions.

4. A magnetic-pole core according to any one of the preceding claims wherein the base section (16) is integral with its corresponding magnetic-pole sections (17).

5. A magnetic-pole core according to any one of claims 1 to 3 wherein the base section (16) and its corresponding magnetic-pole sections (17) are separate pieces attached together.

6. A magnetic-pole core for an electrorotary machine according to any one of the preceding claims wherein each of said first and/or second magnetic-pole pieces has an extended section extending in the circumferential direction of said base section.

7. A magnetic-pole core according to claim 6 wherein said extended section is approximately at the mid-point of said magnetic-pole piece to which it is connected.

8. A magnetic-pole core assembly for an electrorotary machine, having two magnetic-pole cores (10, 11) according to any one of the preceding claims, with the base sections (16) of each core (10, 11) on opposite sides of a concentrically-wound coil such that the magnetic-pole sections (17) of each core (10, 11) extend over the outer face of the coil (14) and the magnetic-pole sections (17) of one core (10) alternate with the magnetic-pole sections (17) of the other core (11).

9. An electrorotary machine including a magnetic-pole core assembly according to claim 8.

## Patentansprüche

1. Magnetkern (10, 11) für rotierende elektrische Maschinen mit einem Basisabschnitt (16) und einer Mehrzahl darauf befestigter Magnetpolabschnitte (17), dadurch gekennzeichnet, daß wenigstens einige Magnetpolabschnitte (17) aus drei Untermagnetstücken zusammengesetzt sind, bei welchen das dritte Magnetpolstück (23) zwischen den ersten und zweiten Magnetpolstücken (20, 21) angeordnet ist, wobei dieses dritte Magnetpolstück (23) sowohl mit den ersten und zweiten Magnetpolstücken (20, 21) als auch mit dem Basisabschnitt (16) verbunden ist.

2. Magnetkern nach Anspruch 1, dadurch gekennzeichnet, daß die ersten und zweiten Magnetpolstücke (20, 21) in Bezug auf den Basisabschnitt (16) im wesentlichen dieselbe Höhe aufweisen.

3. Magnetkern nach Anspruch 1 oder 2, dadurch gekennzeichnet, daß die ersten und zweiten Magnetpolstücke (20, 21) in unterschiedlichen radialen Positionen angeordnet sind.

4. Magnetkern nach einem der vorangegangenen Ansprüche, dadurch gekennzeichnet, daß der Basisabschnitt (16) einstückig mit den entsprechenden Magnetpolabschnitten (17) ausgebildet ist.

5. Magnetkern nach einem der Ansprüche 1 bis 3, dadurch gekennzeichnet, daß der Basisabschnitt (16) und die entsprechenden Magnetpolabschnitte (17) getrennte Elemente sind, welche miteinander verbunden sind.

6. Magnetkern für eine rotierende elektrische Maschine nach einem der vorangegangenen Ansprüche, dadurch gekennzeichnet, daß die ersten und/oder zweiten Magnetpolstücke (20, 21) mit Ansätzen versehen sind, die sich in Umfangsrichtung des Basisabschnittes (16) erstrecken.

7. Magnetkern nach Anspruch 6, dadurch gekennzeichnet, daß die Ansätze ungefähr im mittleren Bereich der Magnetpolabschnitte (17) angeordnet sind, mit welchen sie verbunden sind.

8. Magnetkernanordnung für eine rotierende elektrische Maschine mit zwei Magnetpolkernen (10, 11) nach einem der vorangegangenen Ansprüche, dadurch gekennzeichnet, daß die Basisabschnitte (16) der beiden Kerne (10, 11) auf gegenüberliegenden Seiten eine konzentrisch gewickelten Wicklung derart angeordnet sind, daß die Magnetpolabschnitte (17) jedes Kerns (10, 11) sich über die äußere Fläche der Wicklung (14) erstrecken und die Magnetpolabschnitte (17) des einen Kernes (10) mit den Magnetpolabschnitten (17) des anderen Kerns (11) sich gegenseitig abwechseln.

9. Rotierende elektrischen Maschine, dadurch gekennzeichnet, daß sie eine Magnetkernanordnung gemäß Anspruch 8 aufweist.

**Revendications**

1. Un noyau (10, 11) de pôle magnétique pour une machine électrique tournante possédant une section de base (16) et plusieurs sections de pôles magnétiques (17) sur la section de base (16); caractérisé en ce que au moins certaines des sections de pôles magnétiques (17) comportent trois sous-sections formant des première, (20), deuxième (21) et troisième (23) pièces polaires magnétiques, dans lesquelles ladite troisième pièce polaire magnétique (23) est disposée entre lesdites première (20) et deuxième (21) pièces polaires magnétiques, et ladite troisième (23) pièce polaire magnétique est reliée auxdites première (20) et deuxième (21) pièces polaires magnétiques et à ladite section de base (16).

2. Un noyau de pôle magnétique selon la revendication 1, dans lequel les première (20) et deuxième (21) pièces polaires magnétiques sont sensiblement de la même hauteur à partir de la section de base (16).

3. Un noyau de pôle magnétique selon la revendication 1 ou la revendication 2 dans lequel les première (20) et deuxième (21) pièces polaires magnétiques sont à des positions radiales différentes.

4. Un noyau de pôle magnétique selon l'une quelconque des revendications prédédentes dans lequel la section de base (16) est d'un seul tenant avec ses sections correspondantes de pôle magnétique (17).

5. Un noyau de pôle magnétique selon l'une quelconque des précédentes revendications 1 à 3 dans lequel la section de base (16) et ses sections de pôle magnétique correspondantes sont des pièces séparées attachées ensemble.

6. Un noyau de pôle magnétique pour une machine électrique tournante selon l'une quelconque des précédentes revendications dans lequel chacune desdites première et/ou deuxième pièces polaires magnétiques possède une coupe transversale agrandie s'étendant dans la direction circonférentielle de ladite section de base.

7. Un noyau de pôle magnétique selon la revendication 6 dans lequel ladite section agrandie est à peu près à mi-distance de ladite pièce polaire magnétique à laquelle elle est reliée.

8. Un ensemble de noyaux de pôes magnétiques pour une machine électrique tournante, possédant des noyaux (10, 11) à deux pôles magnétiques selon l'une quelconques des précédentes revendications, les sections de base (16) de chaque noyau (10, 11) étant disposées sur les côtés opposés d'une bobine enroulée de façon concentrique de telle manière que les sections (17) de pôle magnétique de chaque noyau (10, 11) s'étendant au-dessus de la face extériure de la bobine (14) et les sections de pôle magnétique (17) d'un noyau (10) alternant avec les sections de pôle magnétique (17) de l'autre noyau (11).

9. Une machine électrique tournante comprenant un ensemble de noyaux de pôles magnétiques selon la revendication 8.

# FIG.1

# FIG.2

# FIG.3

# FIG.4

2

FIG.5

52

# FIG. 6

# FIG. 7

# FIG. 8

# FIG.9

# FIG.10

# FIG.11

# FIG.12

## FIG.13

## FIG.14

# FIG.15

# FIG.16

# FIG.17

# FIG.18